# EUROPÄISCHE PATENTSCHRIFT

(11) **EP 0 961 956 B1**
(45) Veröffentlichungstag und Bekanntmachung des Hinweises auf die Patenterteilung: **04.07.2001**
(21) Anmeldenummer: 98907887.8
(22) Anmeldetag: 06.02.1998
(51) Int. Cl.: G05B 13/02

(54) **COMPUTERSYSTEM ZUM OPTIMALEN ENTWURF UND ZUM REENTWURF EINES WALZWERKS UND VERFAHREN ZUM BETRIEB EINES SOLCHEN COMPUTERSYSTEMS**
COMPUTER SYSTEM FOR OPTIMALLY DESIGNING AND REDESIGNING A ROLLING MILL AND METHOD FOR OPERATING SUCH A COMPUTER SYSTEM
SYSTEME INFORMATIQUE S'UTILISANT POUR UNE CONCEPTION OPTIMALE ET UNE RECONCEPTION DE LAMINOIR ET PROCEDE D'ACTIONNEMENT D'UN SYSTEME INFORMATIQUE DE CE TYPE

(30) Priorität: 19.02.1997 DE 19706548
(43) Veröffentlichungstag der Anmeldung: 08.12.1999
(73) Patentinhaber: SIEMENS AKTIENGESELLSCHAFT, 80333 München (DE)
(72) Erfinder: PEUKER, Thomas, D-91052 Erlangen (DE); SCHMID, Friedemann, D-91056 Erlangen (DE); GRAMCKOW, Otto, D-91052 Erlangen (DE); SÖRGEL, Günter, D-90455 Nürnberg (DE)
(86) Internationale Anmeldenummer: DE9800347
(87) Internationale Veröffentlichungsnummer: WO9837464

(56) Entgegenhaltungen:
- EP-A- 0 374 944
- EP-A- 0 446 036
- DE-A- 4 325 187
- DE-A- 19 508 474
- US-A- 5 331 565
- US-A- 5 386 945
- LINDHOFF D ET AL: "ERFAHRUNGEN BEIM ENSATZ NEURONALER NETZE IN DER WALZWERKSAUTOMATISIERUNG" STAHL UND EISEN, Bd. 114, Nr. 4, 18.April 1994, Seiten 49-53, 208, XP000449399
- SATOSHI HATTORI ET AL: "FUZZY CONTROL ALGORITHM AND NEURAL NETWORKS FOR FLATNESS CONTROL OF A COLD ROLLING PROCESS" HITACHI REVIEW, Bd. 41, Nr. 1, 1.Februar 1992, Seiten 31-38, XP000312049
- E.MAYRAND ET AL: "A GENETIC SEARCH ALGORITHM TO OPTIMIZE JOB SEQUENCING UNDER A TECHNOLOGICAL CONSTRAINT IN A ROLLING-MILL FACILITY " OPERATIONS RESEARCH SPEKTRUM, Bd. 17, Nr. 2-3, 1995, Seiten 183-191, XP002065765

## Beschreibung

Die Erfindung betrifft ein Verfahren zum optimalen Entwurf und zur Reentwurf eines Walzwerks mittels eines modularen Modells sowie ein Verfahren zum Betrieb eines solchen Computersystems.

Es ist bekannt, beim Entwurf von Walzwerken bzw. bei deren Reentwurf verschiedene Alternativen für die Konfiguration des Walzwerks in bezug auf ihre Eigenschaften zu untersuchen und die augenscheinlich beste Alternative auszuwählen. Dieses Verfahren ist sehr aufwendig und damit teuer und kann zudem nicht den Entwurf einer optimierten Anlage garantieren.

Aufgabe der Erfindung ist es, obengenannte Probleme zu vermeiden.

Die Aufgabe wird erfindungsgemäß durch ein Computersystem gemäß Anspruch 1 bzw. ein Verfahren gemäß Anspruch 7 gelöst. Dieses erfindungsgemäße Computersystem bzw. Verfahren zum optimalen Entwurf oder zum Reentwurf eines Walzwerks, mit einer Optimierungseinheit und einem Strukturspeicher, in dem eine Walzwerkssuperstruktur gespeichert ist, die ein Modell eines fiktiven Walzwerks ist, das verschiedene mögliche Alternativen der Synthese und der Auslegung eines Walzwerkes aufweist, wobei die Alternativen mögliche Pfade durch die Walzwerkssuperstruktur bis zum Ausgang der Walzwerkssuperstruktur bilden. Die Optimierungseinheit greift auf den Strukturspeicher und einen Kriteriumsspeicher zu, in dem zumindest ein Optimierungskriterium gespeichert ist. Weiterhin ermittelt die Optimierungseinheit den optimalen Pfad aus der Anzahl der möglichen Pfade in bezug auf das in dem Kriteriumsspeicher gespeicherte Optimierungskriterium. Auf diese Weise wird eine systematische Vorgehensweise zur Prozeßsynthese und damit eine gute Nachvollziehbarkeit, hohe Anschaulichkeit sowie Optimalität eines Walzwerks erreicht. Außerdem ist das erfindungsgemäße Computersystem auch für Strukturparameterstudien unter Optimierung der Auslegungs- und Steuerungsparameter geeignet.

In vorteilhafter Ausgestaltung der Erfindung weist die Walzwerkssuperstruktur Teilmodelle eines Walzwerks, die über Strukturvariablen verknüpft sind, auf, wobei die Strukturvariablen die Verzweigungspunkte der Pfade durch die Walzwerkssuperstruktur bilden. So können in besonders geeigneter Weise bereits existierende Modelle von Anlagenteilen eines Walzwerks verwendet werden.

In weiterer vorteilhafter Ausgestaltung der Erfindung sind die Teilmodelle ihrerseits in Teilmodelle aufgliederbar, was ein hohes Maß an Modularität erlaubt und damit den Aufwand für die Erstellung einer Walzwerkssuperstruktur vermindert.

In weiterer vorteilhafter Ausgestaltung der Erfindung sind die Teilmodelle Modelle von Walzwerken, Walzstraßen, Walzgerüsten oder weiteren Prozeßstufen eines Walzwerkes.

In weiterer vorteilhafter Ausgestaltung der Erfindung ist in dem Kriteriumsspeicher ein Optimierungskriterium zur Optimierung nach Investitionskosten für das Walzwerk, zur Optimierung nach Betriebskosten des Walzwerks, zur Optimierung nach Materialdurchsatz durch das Walzwerk, zur Optimierung in bezug auf den Energieverbrauch des Walzwerks, zur Optimierung in bezug auf den Walzenverschleiß, zur Optimierung in bezug auf Verfügbarkeit und/oder zur Optimierung in bezug auf Zuverlässigkeit des Walzwerks gespeichert.

Weitere vorteilhafte erfindungsgemäße Einzelheiten ergeben sich aus der nachfolgenden Beschreibung von Ausführungsbeispielen. Im einzelnen zeigen:
- FIG 1: eine vorteilhafte Ausgestaltung eines erfindungsgemäßen Computersystems,
- FIG 2: die schematische Arbeitsweise eines erfindungsgemäßen Computersystems,
- FIG 3: eine Auswahl von alternativen technologischen Prozeßstufen,
- FIG 4: eine Auswahl der Anzahl von technologischen Prozeßstufen in Reihenschaltung,
- FIG 5: eine Auswahl der Anzahl von technologischen Prozeßstufen in Parallelschaltung,
- FIG 6: eine Art der Kopplung zwischen zwei technologischen Prozeßstufen,
- FIG 7: eine Auswahl verschiedener Verfahrenskonzepte,
- FIG 8: eine Optimierung mittels genetischer Algorithmen.

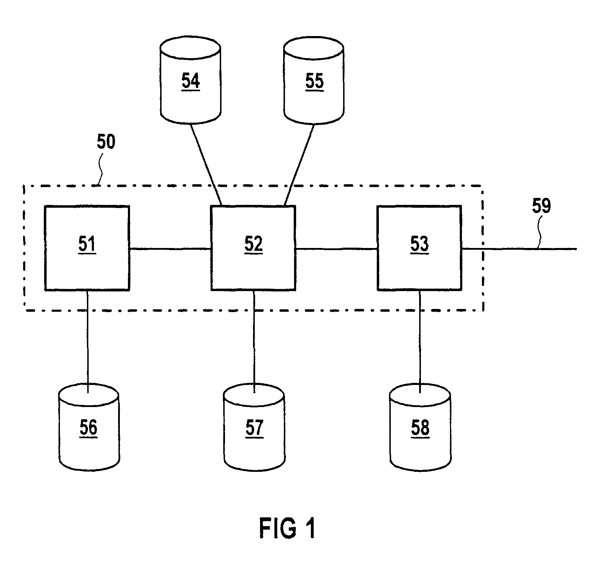

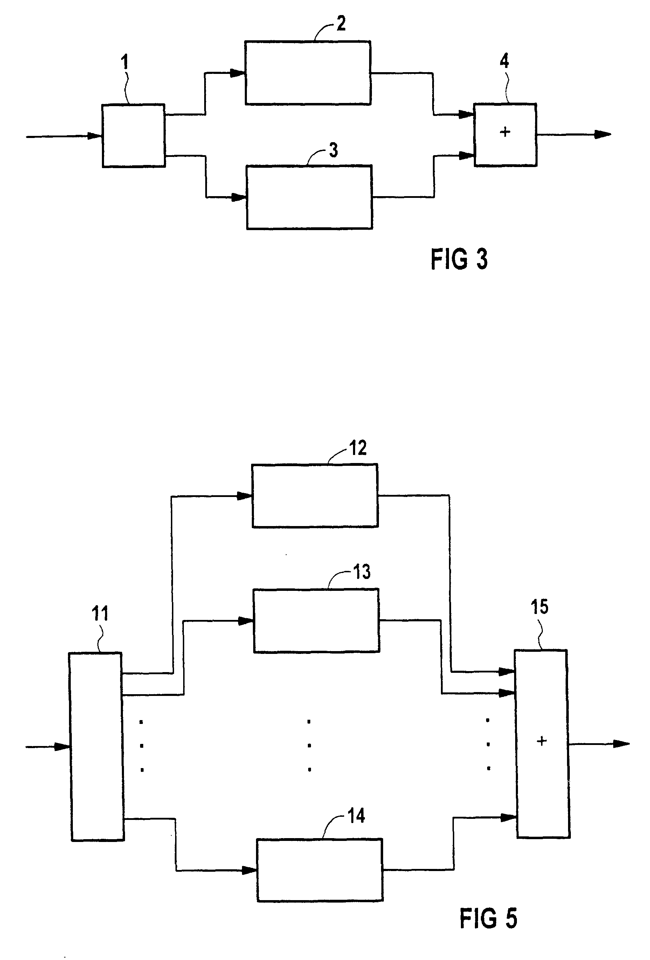

FIG 1 zeigt eine vorteilhafte Ausgestaltung eines erfindungsgemäßen Computersystems. Dieses weist eine Optimierungseinheit 50 mit einer Auswahleinheit 51, einem Bewertungsmodul 52 sowie einem Vergleichsmodul 53 auf. Die Auswahleinheit 51, das Bewertungsmodul 52 und des Vergleichsmodul 53 sind datentechnisch miteinander verbunden. Die Auswahleinheit 51 greift auf einen Strukturspeicher 56 zu. In dem Strukturspeicher 56 ist eine Walzwerkssuperstruktur eines Walzwerks gespeichert. Die Walzwerkssuperstruktur weist Modelle von Anlagenteilen eines Walzwerks sowie Strukturvariable auf. Die Teilmodelle sind durch Strukturvariable verbunden. Die Walzwerkssuperstruktur ist ein fiktives nicht existentes Walzwerk, in dem viele verschiedene Alternativen möglicher Ausgestaltungen von Walzwerken abgebildet sind. Wie in den FIG 3 bis 7 näher ausgeführt, bilden die Strukturvariablen Verzweigungspunkte von Pfaden durch die Superstruktur, wobei jeder Pfad eine alternative Ausgestaltung eines Walzwerks oder einer Walzstraße darstellt. Die Einzelheiten und Details der Teilmodelle können mit im Strukturspeicher abgespeichert oder in einem separaten Anlagenmodulspeicher 57 abgespeichert sein. Letztere Möglichkeit ist in dem Ausführungsbeispiel gemäß FIG 1 ausgeführt. Die Auswahleinheit 51 wählt aus der im Strukturspeicher 56 abgespeicherten Walzwerkssuperstruktur einen Pfad aus und übergibt die Information über die Struktur des ausgewählten Pfades an ein Bewertungsmodul 52. Das Bewertungsmodul 52 hat Zugriff auf den Anlagenmodulspeicher 57 sowie auf einen Kriteriumspeicher 54 und ein Nebenbedingungsspeicher 55. In dem Kriteriumspeicher 54 ist ein Optimierungskriterium abgespeichert, in das eine Auswahl der Optimierungsziele
- Investitionskosten für ein Walzwerk,
- Betriebskosten für ein Walzwerk,
- Materialdurchsatz durch ein Walzwerk,
- Energieverbrauch eines Walzwerks,
- Walzenverschleiß,
- Verfügbarkeit und
- Zuverlässigkeit
eingehen. Im Nebenbedingungsspeicher 55 sind Nebenbedingungen für die betrachtete Walzstraße abgespeichert. Diese Nebenbedingungen können z.B.
- eine Obergrenze für Investitionskosten für das Walzwerk,
- eine Obergrenze für Betriebskosten für das Walzwerk,
- ein Mindestmaterialdurchsatz durch das Walzwerk
- ein maximal zulässiger Energieverbrauch des Walzwerks,
- ein maximal zulässiger Walzenverschleiß,
- eine Mindestverfügbarkeit oder
- eine Minestzuverlässigkeit des Walzwerks
sein. Das Bewertungsmodul 52 bewertet den durch die Auswahleinheit 51 ausgewählten Pfad, in bezug auf das Optimierungskriterium und unter Einhaltung der Nebenbedingungen. Das Ergebnis dieser Bewertung wird in einem Vergleichsmodul 53 mit bereits bewerteten Alternativen, die in einem Optimallösungsspeicher 58 abgespeichert sind, verglichen. Ist die neue Lösung besser, so wird die im Optimallösungsspeicher 58 abgespeicherte Lösung oder möglicherweise ein Teil der Lösung, wenn z.B. mehrere Lösungen abgespeichert sind, ersetzt. Dieser Vorgang wird solange wiederholt, bis alle Pfade, die sich aus der im Strukturspeicher 56 abgespeicherten Walzwerkssuperstruktur ergeben, abgearbeitet sind. Nach erfolgter Optimierung gibt das Vergleichsmodul 53 die Optimallösung 59 aus. Zur Ausgabe der Optimallösung 59 kann auch ein spezielles Modul vorgesehen werden.

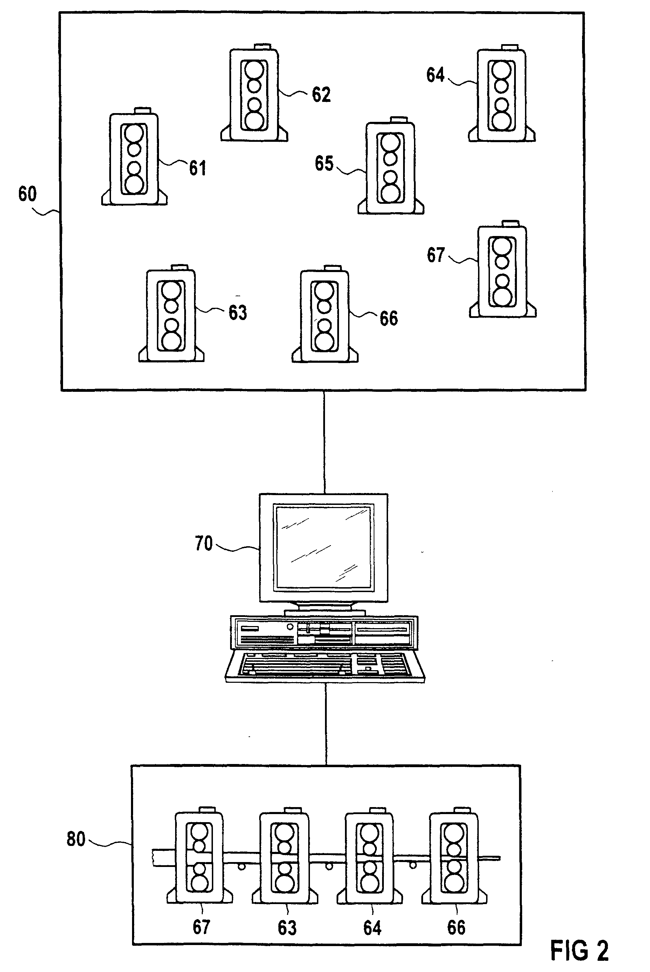

FIG 2 zeigt eine schematische Darstellung für die Arbeitsweise eines erfindungsgemäßen Computersystems am Beispiel der Auslegung einer Walzstraße. Dabei stellt das erfindungsgemäße Computersystem 70 beispielhaft aus einer Menge 60 von zur Verfügung stehenden Walzgerüsten 61,62,63,64,65,66,67 eine Walzstraße mit den Walzgerüsten 67,63,64,66 zusammen, die eine Optimallösung in bezug auf ein gewähltes Optimierungskriterium und unter Berücksichtigung ausgewählter Nebenbedingungen, sofern vorhanden, zusammen. Im vorliegenden Ausführungsbeispiel hat das Computersystem eine viergerüstige Walzstraße 80 aus den Walzgerüsten 67,63,64,66 zusammengestellt.

FIG 3 zeigt die Auswahl von technologischen Prozeßstufen, z.B. die Auswahl zwischen einem Gerüst 2 mit CVC-Walzen und einem Gerüst 3 ohne CVC-Walzen aus einer Walzwerkssuperstruktur, die eine Walzwerkssuperstruktur oder einen Teil einer Walzwerkssuperstruktur darstellt. Bezugszeichen 1 bezeichnet dabei eine Strukturvariable, die einer Weiche vergleichbar ist. Hat die Strukturvariable den Wert 0, so wird die Alternative 2 "Gerüst mit CVC-Walzen" gewählt. Hat die Strukturvariable 1 dagegen den Wert 1, so wird die untere Alternative 3 "Gerüst ohne CVC-Walzen" gewählt. Die beiden Ausgänge der Blöcke 2 und 3 werden in einem Addierer 4 anschließend zusammengefügt. Die Verbindungspfeile zwischen den Blöcken 1, 2, 3 und 4 symbolisieren Materialfluß.

Als weiteres Beispiel kann z.B. Block 2 ein Haspel und Block 3 einen Rollgang symbolisieren.

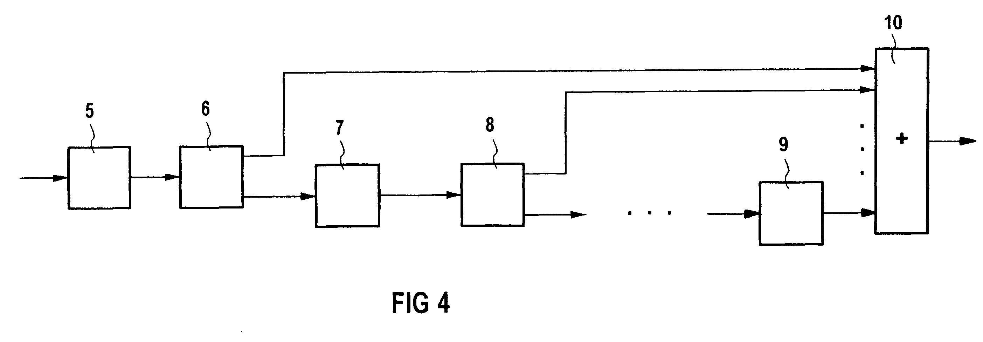

FIG 4 zeigt die Auswahl der Anzahl von technologischen Prozeßstufen in Reihenschaltung, mittels der die optimale Anzahl von gleichen Prozeßstufen in Reihenschaltung ermittelt wird. Dabei bezeichnen Bezugszeichen 5, 7 und 9 Walzgerüste, Bezugszeichen 6 und 8 Strukturvariablen und Bezugszeichen 10 einen Addierer. Hat z.B. die Strukturvariable 6 den Wert 0, so folgt kein weiteres Gerüst, d.h. es wird der Pfad direkt zum Addierer 10 gewählt. Hat die Strukturvariable 6 dagegen den Wert 1, so folgt zumindest ein weiteres Gerüst 7. Das heißt, es wird der Ausgang der Strukturvariablen 6 gewählt, der in das Walzgerüst 7 hineingeht. In ähnlicher Weise wird mit weiteren Strukturvariablen verfahren, z.B. mit der Strukturvariablen 8.

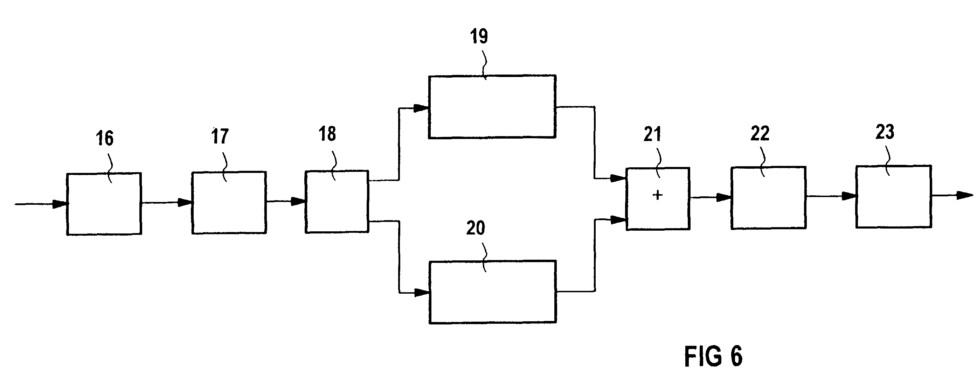

FIG 5 zeigt die Auswahl der Anzahl von technologischen Prozeßstufen in Parallelschaltung mittels der die optimale Anzahl von gleichen Prozeßstufen in Parallelschaltung ermittelt werden kann. Dabei bezeichnet Bezugszeichen 11 eine Strukturvariable, Bezugszeichen 12, 13 und 14 technologische Prozeßstufen, z.B. Elektroöfen, und Bezugszeichen 15 ein Addierer. Die Strukturvariable 11 kann gleichzeitig eine Verteilungsvariable sein, d.h. eine reale im Prozeß existierende Weiche. Jedem Ausgang des Blocks 11 wird beim Optimierungsvorgang ein Wert Bᵢ mit 0 ⇔ Bₗ ⇔ 1, wobei die Summe aller Bᵢ 1 ist. Wird in einem Optimierungszyklus Bᵢ = 0 gewählt, so heißt das, daß eine Alternative ohne die entsprechende technologische Prozeßstufe gewählt wird. Ist ein Bᵢ = 1, so wird eine Alternative betrachtet, bei der die entsprechende Prozeßstufe als einzige vorhanden ist. Ist dagegen Bᵢ größer 0 und kleiner 1, so ist die entsprechende Strukturvariable gleichzeitig eine Verteilungsvariable, wobei Bᵢ dann dem Anteil des gesamten Materialflusses entspricht, der der entsprechenden Prozeßstufe zugeführt wird.

FIG 6 zeigt die Art der Kopplung zwischen zwei technologischen Prozeßstufen, wobei die eine kontinuierlich 19, z.B. zwischen zwei Walzgerüsten innerhalb einer Fertigungsstraße, und die andere diskontinuierlich 20, z.B. zwischen Vor- und Fertigstraße, ist. Dabei bezeichnen Bezugszeichen 16 und 23 Walzgerüste, Bezugszeichen 17 und 22 Kühlungen, Bezugszeichen 18 eine Strukturvariable und Bezugszeichen 21 einen Addierer. Dabei wird die Strukturvariable 18 während des Optimierungsprozesses wie in FIG 1 beschrieben zum Einstellen verschiedener Pfade durch die Superstruktur verwendet.

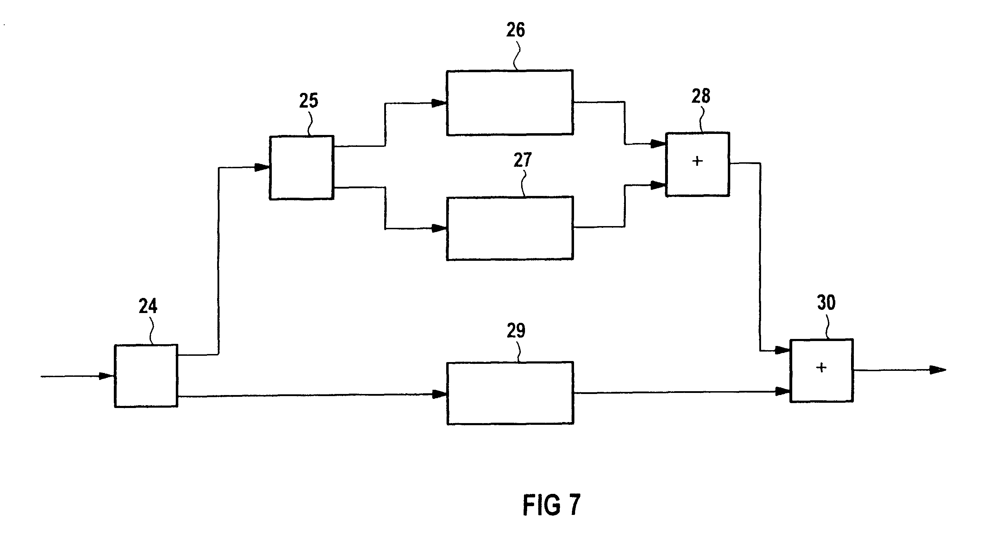

FIG 7 zeigt die Verwendung der Superstruktur zur Entscheidung über das Verhältnis von Anzahl gleicher/ähnlicher Anlagen und deren Anlagenkapazitäten, in diesem Fall der Entscheidung zwischen einem großen Walzwerk 29 und zwei kleinen Walzwerken 26, 27. Mittels der binären Strukturvariable 24 sowie des Summierers 30 werden die beiden alternativen Pfade während des Optimierungsprozesses eingestellt. Die Alternative zugunsten der beiden kleinen Walzwerke 26, 27 weist zudem noch einen Verteiler 25 sowie eine Zusammenführung in Form eines Summierers 28 auf.

Weiterhin ist das erfindungsgemäße Verfahren für eine Entscheidung zwischen der Alternativen Reihen- und Parallelstruktur, für die Entscheidung über Standort und Transportprobleme (z.B. optimale Lage eines Hüttenwerkes in bezug auf Rohstoff- und/oder Zwischenproduktlieferanten und Abnehmern) sowie für die Entscheidung über Lagerhaltungsprobleme (z.B. optimale Auslastung der Lagerkapazitäten) einsetzbar.

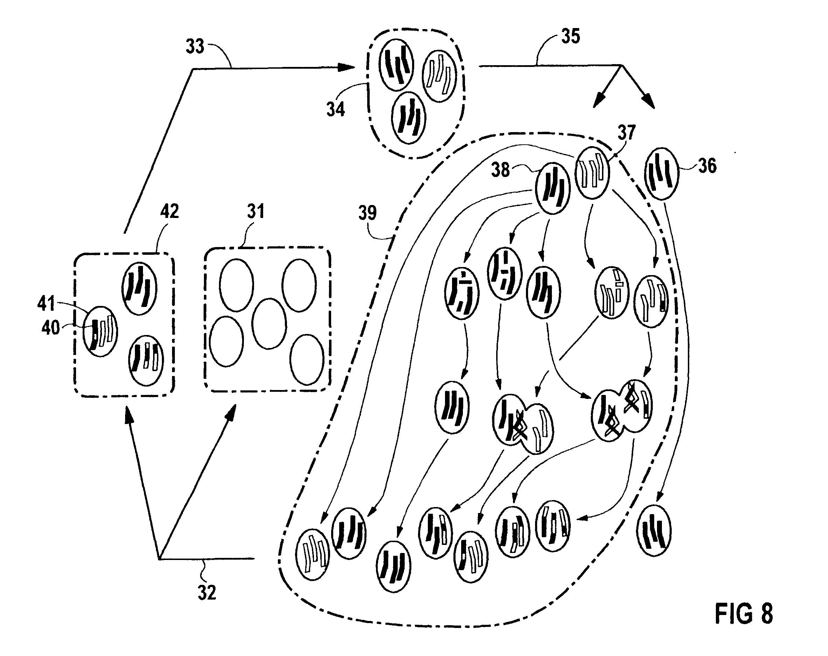

Werden mittels des erfindungsgemäßen Computersystems neben den Pfaden auch gleichzeitig Parameter für die Teilmodelle optimiert, so sind vorteilhafterweise genetische Algorithmen einsetzbar. FIG 8 zeigt vereinfacht das Vorgehen bei der Optimierung mittels genetischer Algorithmen. Die Optimierung erfolgt derart,
- daß Werte für die zu optimierenden Parameter in sogenannten Genen 40 angeordnet sind, die wiederum Individuen 41 einer sogenannten Population zugeordnet sind,
- daß eine bestimmte Anzahl von Individuen 41 eine sogenannte Initialpopulation bildet,
- daß einige oder alle Werte in den Genen um einen Zufallswert, insbesondere einen Zufallswert aus einer Auswahl normalverteilter Zufallszahlen, verändert werden, so daß sich eine veränderte Population 34 ergibt (Schritt 33. in FIG 8),
- daß zusammengehörige Gene auf sogenannten Chromosomen zusammengefaßt werden, die bei der Rekombination gemeinsam vererbt werden,
- daß die Individuen mit ihren Genen, d.h. den Werten für die entsprechenden Parameter, mittels einer Optimierungsfunk tion bewertet werden und
- daß aufgrund dieser Bewertung eine Auswahl von Individuen für eine neue Population erfolgt, wobei Individuen statistisch bevorzugt werden, die die Optimierungsfunktion besser erfüllen als andere Individuen,
- daß die verbleibenden Individuen 31 nicht weiter berücksichtigt werden,
- daß der Optimierungszyklus mit der neuen Population so lange wiederholt wird, bis eine als optimal erachtete Lösung erreicht ist.

## Patentansprüche

1. Computersystem zum optimalen Entwurf oder zum Reentwurf eines Walzwerks, mit einer Optimierungseinheit (50) und einem Strukturspeicher (56), in dem eine Walzwerkssuperstruktur gespeichert ist, die ein Modell eines fiktiven Walzwerks ist, das verschiedene mögliche Alternativen der Synthese und der Auslegung eines Walzwerkes aufweist, wobei die Alternativen mögliche Pfade durch die Walzwerkssuperstruktur bilden, wobei die Optimierungseinheit (50) auf den Strukturspeicher (56) und einen Kriteriumsspeicher (54), in dem zumindest ein Optimierungskriterium gespeichert ist, zugreifend ausgebildet ist, und wobei die Optimierungseinheit (50) den optimalen Pfad aus der Anzahl der möglichen Pfade in bezug auf das in dem Kriteriumsspeicher (54) gespeicherte Optimierungskriterium ermittelnd ausgebildet ist.

2. Computersystem nach Anspruch 1, **dadurch gekennzeichnet**, daß die Walzwerkssuperstruktur Teilmodelle 2,3,5,7,9,12,13,14,16,17,19,20,22,23,-25,26,27,29) eines Walzwerks, die über Strukturvariablen (6,8,11,18,24) verknüpft sind, aufweist, wobei die Strukturvariablen (6,8,11,18,24) die Verzweigungspunkte der Pfade durch die Walzwerkssuperstruktur bilden.

3. Computersystem nach Anspruch 2, **dadurch gekennzeichnet**, daß die Teilmodelle 2,3,5,7,9,12,13,14,16,17,19,20,22,23,25,26,27,29) ihrerseits in Teilmodelle aufgliederbar sind.

4. Computersystem nach Anspruch 2 oder 3, **dadurch gekennzeichnet**, daß die Teilmodelle Modelle von Walzwerken (26,27,29), Walzstraßen, Walzgerüsten (2,3,5,7,9,16,23) oder weiteren Prozeßstufen (12,13,14,17,19,20,22,25) eines Walzwerkes sind.

5. Computersystem nach einem der vorhergehenden Ansprüche, **dadurch gekennzeichnet**, daß in dem Kriteriumsspeicher (54) ein Optimierungskriterium zur Optimierung nach Investitionskosten für das Walzwerk, zur Optimierung nach Betriebskosten des Walzwerks, zur Optimierung nach Materialdurchsatz durch das Walzwerk, zur Optimierung in bezug auf den Energieverbrauch des Walzwerks, zur Optimierung in bezug auf den Walzenverschleiß, zur Optimierung in bezug auf Verfügbarkeit und/oder zur Optimierung in bezug auf Zuverlässigkeit des Walzwerks gespeichert ist.

6. Computersystem nach einem der vorhergehenden Ansprüche, **dadurch gekennzeichnet**, daß es eine Auswahleinheit (51), ein Bewertungsmodul (52) und ein Vergleichsmodul (53) aufweist, wobei das Auswahlmodul (51) auf den Strukturspeicher (56), das Bewertungsmodul (52) auf den Kriteriumsspeicher (54), einen Nebenbedingungsspeicher (55) sowie einen Anlagenmodulspeicher (57) und das Vergleichsmodul (53) auf ein Optimallösungsspeicher zugreift.

7. Verfahren zum Betrieb eines Computersystems nach einem der vorhergehenden Ansprüche,
- wobei eine Optimierungseinheit (50) auf einen Strukturspeicher (56), in dem eine Walzwerkssuperstruktur gespeichert ist, die ein Modell eines fiktiven Walzwerks ist, das verschiedene mögliche Alternativen der Synthese und der Auslegung des Walzwerkes aufweist, und auf einen Kriteriumsspeicher (54), in dem zumindest ein Optimierungskriterium gespeichert ist, zugreift,
- wobei die Alternativen durch mögliche Pfade durch die Walzwerkssuperstruktur gebildet werden,
- und wobei mittels der Optimierungseinheit (50) der optimale Pfad aus der Anzahl der möglichen Pfade in bezug auf ein in dem Kriteriumsspeicher (54) gespeichertes Optimierungskriterium ermittelt wird.

8. Verfahren nach Anspruch 7, **dadurch gekennzeichnet**, daß die Optimierung mittels genetischer Algorithmen erfolgt.

## Claims

1. Computer system for optimally designing or redesigning a rolling mill, having an optimization unit (50) and a structure memory (56) in which a rolling-mill superstructure is stored that is a model of a fictitious rolling mill that has different possible alternatives for the synthesis and the layout of a rolling mill, wherein the alternatives are possible paths through the rolling-mill superstructure, wherein the optimization unit (50) is, formed so as to have access to the structure memory (56) and a criterion memory (54), in which at least one optimization criterion is stored, and wherein the optimization unit (50) is formed so as to determine the optimum path from the number of possible paths with regard to the optimization criterion that is stored in the criterion memory (54).

2. Computer system according to claim 1, characterised in that the rolling-mill superstructure has partial models (2,3,5,7,9,12,13,14,16,17,19,20,22,23,25,26,27, 29) of a rolling mill which are linked by way of structure variables (6,8,11,18,24), with the structure variables (6,8,11,18,24) forming the branch points of the paths through the rolling-mill superstructure.

3. Computer system according to claim 2, characterised in that the partial models (2,3,5,7,9,12,13,14,16,17, 19,20,22,23,25,26,27,29) for their part can be broken down into partial models.

4. Computer system according to claim 2 or 3, characterised in that the partial models are models of rolling mills (26, 27, 29), rolling trains, rolling stands (2,3,5,7,9,16,23) or further process stages (12,13,14,17,19,20,22,25) of a rolling mill.

5. Computer system according to one of the preceding claims, characterised in that an optimization criterion is stored in the criterion memory (54) for optimization according to investment costs for the rolling mill, for optimization according to operating costs of the rolling mill, for optimization according to material throughput through the rolling mill, for optimization with regard to the energy consumption of the rolling mill, for optimization with regard to roll wear, for optimization with regard to availability and/or for optimization with regard to reliability of the rolling mill.

6. Computer system according to one of the preceding claims, characterised in that it has a selection unit (51), an evaluating module (52) and a comparison module (53), with the selection module (51) accessing the structure memory (56), the evaluating module (52) accessing the criterion memory (54), a secondary condition memory (55) and also a system-module memory (57), and the comparison module (53) accessing an optimum solution memory.

7. Method for operating a computer system according to one of the preceding claims,
- wherein an optimization unit (50) accesses a structure memory (56), in which a rolling-mill superstructure is stored that is a model of a fictitious rolling mill that has different possible alternatives for the synthesis and the layout of a rolling mill, and accesses a criterion memory (54), in which at least one optimization criterion is stored,
- wherein the alternatives are formed by possible paths through the rolling-mill superstructure,
- and wherein the optimum path is determined from the number of possible paths by means of the optimization unit (50) with regard to an optimization criterion that is stored in the criterion memory (54).

8. Method according to claim 7, characterised in that optimization is effected by means of genetic algorithms.

## Revendications

1. Système d'ordinateur pour concevoir de manière optimale ou pour reconcevoir un laminoir, comportant une unité (50) d'optimisation et une mémoire (56) de structure dans laquelle est enregistrée une superstructure de laminoir qui est un modèle d'un laminoir fictif qui comporte diverses variantes possibles de la synthèse et de la conception d'un laminoir, les variantes formant des voies possibles dans la superstructure de laminoir, l'unité (50) d'optimisation étant réalisée de manière à pouvoir accéder à la mémoire (56) de structure et à une mémoire (54) de critères dans laquelle est enregistrée au moins un critère d'optimisation, et l'unité (50) d'optimisation étant réalisée de manière à déterminer la voie optimale parmi le nombre des voies possibles en fonction du critère d'optimisation enregistré dans la mémoire (54) de critères.

2. Système d'ordinateur suivant la revendication 1, caractérisé en ce que la superstructure de laminoir comporte des sous-modèles (2, 3, 5, 7, 9, 12, 13, 14, 16, 17, 19, 20, 22, 23, 25, 26, 27, 29) d'un laminoir qui sont combinés par l'intermédiaire de variables (6, 8, 11, 18, 24) de structure, les variables (6, 8, 11, 18, 24) de structure formant les points de bifurcation des voies dans la superstructure de laminoir.

3. Système d'ordinateur suivant la revendication 2, caractérisé en ce que les sous-modèles (2, 3, 5, 7, 9, 12, 13, 14, 16, 17, 19, 20, 22, 23, 25, 26, 27, 29) peuvent être subdivisés pour leur part en sous-modèles.

4. Système d'ordinateur suivant la revendication 2 ou 3, caractérisé en ce que les sous-modèles sont des modèles de laminoir (26, 27, 29), de trains de laminage, de cages (2, 3, 5, 7, 9, 16, 23) de laminoir ou d'autres étages (12, 13, 14, 17, 19, 20, 22, 25) opératoires d'un laminoir.

5. Système d'ordinateur suivant l'une des revendications précédentes, caractérisé en ce qu'il est enregistré dans la mémoire (54) de critères un critère d'optimisation pour l'optimisation suivant des coûts d'investissement pour le laminoir, pour l'optimisation suivant des coûts de fonctionnement du laminoir, pour l'optimisation suivant le débit de matériau dans le laminoir, pour l'optimisation en fonction de la consommation d'énergie du laminoir, pour l'optimisation en fonction de l'usure des cylindres, pour l'optimisation en fonction de la disponibilité et/ou pour l'optimisation en fonction de la fiabilité du laminoir.

6. Système d'ordinateur suivant l'une des revendications précédentes, caractérisé en ce qu'il comporte une unité (51) de sélection, un module (52) d'évaluation et un module (53) de comparaison, l'unité (51) de sélection accédant à la mémoire (56) de structure, le module (52) d'évaluation accédant à la mémoire (54) de critère, à une mémoire (55) de conditions secondaires ainsi qu'à une mémoire (57) de module d'installation et le module (53) de comparaison accédant à une mémoire de solutions optimales.

7. Procédé pour faire fonctionner un système d'ordinateur suivant l'une des revendications précédentes,
- une unité (50) d'optimisation accédant à une mémoire (56) de structure dans laquelle est enregistrée une superstructure de laminoir qui est un modèle d'un laminoir fictif qui comporte diverses variantes possibles de la synthèse et de la conception du laminoir, et à une mémoire (54) de critères dans laquelle est enregistré au moins un critère d'optimisation,
- les variantes étant formées par des voies possibles dans la superstructure de laminoir,
- et la voie optimale étant déterminée au moyen de l'unité (50) d'optimisation parmi la pluralité des voies possibles en fonction d'un critère d'optimisation enregistré dans la mémoire (54) de critères.

8. Procédé suivant la revendication 7, caractérisé en ce que l'optimisation s'effectue au moyen d'algorithmes génétiques.
